# EUROPÄISCHE PATENTSCHRIFT

(11) **EP 3 567 287 B1**
(45) Veröffentlichungstag und Bekanntmachung des Hinweises auf die Patenterteilung: **03.03.2021**
(21) Anmeldenummer: 18000434.3
(22) Anmeldetag: 07.05.2018
(51) Int. Cl.: F16K 1/22, F16K 1/226

(54) **FÜNFFACH ASYMMETRISCH AUFGEBAUTE ABSPERRKLAPPE**
QUINTUPLE ASYMMETRICALLY CONSTRUCTED BUTTERFLY VALVE
VANNE PAPILLON À ASYMÉTRIE QUINTUPLE

(43) Veröffentlichungstag der Anmeldung: 13.11.2019
(73) Patentinhaber: Gaida, Gregor, 48-100 Glubczyce (PL)
(72) Erfinder: Gaida, Gregor, 48-100 Glubczyce (PL)

(56) Entgegenhaltungen:
- EP-A1- 0 089 341
- CN-A- 103 759 027
- CN-U- 205 745 342
- DE-A1-102008 011 371
- KR-A- 20150 117 181
- US-A- 4 770 393

## Beschreibung

Zur Steuerung des Flusses eines Mediums, z.B. einer Flüssigkeit oder eines Gases durch eine Rohrleitung, kann z.B. eine Absperrklappe verwendet werden. Mit einer solchen Armatur kann die Durchflußmenge und/oder die Durchflußgeschwindigkeit gesteuert werden. Die Erfindung befaßt sich mit der Konstruktion einer solchen Absperrklappe.

Dichtschließende Absperrklappen sind bisher in vier verschiedenen Konstruktionsversionen bekannt:

### 1) Zentrisch aufgebaute Klappen.

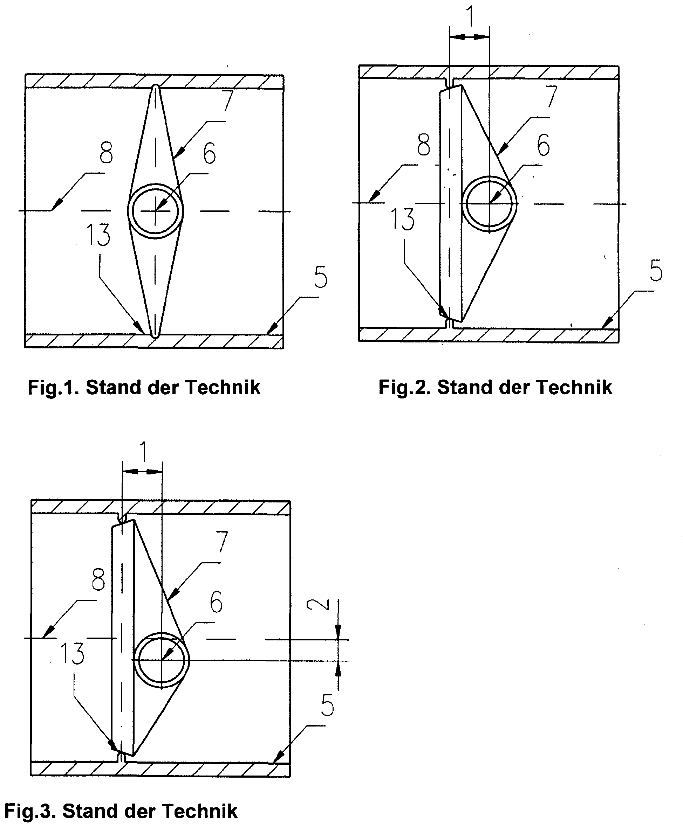

**Fig.1** Zeigt schematisch eine zentrisch aufgebaute Absperrklappe.
- Die elastisch ausgekleidete Rohrleitung **5** bildet gleichzeitig die Dichtungsfläche **13.**
- Die Dichtungsfläche **13** ist rotationssymmetrisch.
- Die Rotationsachse (Symmetrieachse), der als Dichtfläche **13** fungierenden ausgekleideten Rohrleitung **5** ist identisch mit der Rohrleitungsachse **8.**
- Der Drehpunkt **6** der Klappenscheibe **7** sitzt in der Mitte der elastisch ausgekleideten Rohrleitung **5.**

Diese Bauweise kann nur dann das Medium in der Rohrleitung wirksam abdichten, wenn der bewegliche Teil der Armatur: die Klappenscheibe **7,** im Durchmesser größer ist, als die in der Rohrleitung unbeweglich eingebaute Dichtungsfläche **13.** Das mehrfache Einpressen der im Durchmesser größeren Klappenscheibe **7** in die im Durchmesser kleinere Dichtungsfläche **13** kann nur dann funktionieren, wenn eines dieser Bauteile aus elastischen Werkstoffen, wie z.B. Elastomeren hergestellt werden. Der Einsatzbereich dieser Absperrklappen ist meist auf Temperaturen bis maximal 130°C begrenzt.

### 2) Einfach exzentrisch aufgebaute Klappen.

**Fig.2** Zeigt schematisch eine einfach exzentrisch aufgebaute Absperrklappe.
- Die Dichtungsfläche **13** ist rotationssymmetrisch.
- Die Rotationsachse (Symmetrieachse) der Dichtungsfläche **13** ist identisch mit der Rohrleitungsachse **8.**
- Der Drehpunkt **6** der Klappenscheibe **7** ist aus der Mitte der Dichtungsfläche **13** entlang der Rohrleitungsachse **8** versetzt: Asymmetrie **1**.
- Der Drehpunkt **6** der Klappenscheibe **7** sitzt in der Mitte der Rohrleitungsachse **8** (hier identisch mit der Symmetrieachse bzw. Rotationsachse der Dichtungsfläche **13**).

Diese Bauweise hat den Vorteil, dass die Kinematik ähnlich wie in einem Kugelhahn aufgebaut werden kann und dass dadurch auch metallische Dichtungen möglich sind. Diese Konstruktion hat aber den Nachteil, dass die Bewegung der Armatur (wie bei einem Kugelhahn) während des gesamten Öffnungsvorgangs stets mit Reibung zwischen der Klappenscheibe **7** und der Dichtungsfläche **13** verbunden ist. 3) Doppelt exzentrisch aufgebaute Klappen.

**Fig.3** Zeigt schematisch eine doppelt exzentrisch (doppelt asymmetrisch) aufgebaute Absperrklappe.
- Die Dichtungsfläche **13** ist rotationssymmetrisch.
- Die Rotationsachse (Symmetrieachse) der Dichtungsfläche **13** ist identisch mit der Rohrleitungsachse **8.**
- Der Drehpunkt **6** der Klappenscheibe **7** ist aus der Mitte der Dichtungsfläche **13** entlang der Rohrleitungsachse **8** versetzt: Asymmetrie **1**.
- Der Drehpunkt **6** der Klappenscheibe **7** ist aus der Mitte der Rohrleitungsachse **8** (hier identisch mit der Symmetrieachse bzw. Rotationsachse der Dichtungsfläche **13**) in Richtung einer der Rohrleitungswandungen versetzt: Asymmetrie **2.**

Diese Bauweise hat den Vorteil, dass je nach Positionierung der Lage des Mittelpunktes der Drehbewegung **6** auch eine reibungsfreie Betätigung der Armatur möglich ist. Jedoch ist es notwendig, einen großen Abstand des Mittelpunktes der Drehbewegung, von der Mitte der Rohrleitung (meist auch gleichzeitig Symmetrieachse der Dichtung) zu wählen, um eine reibungsfreie Betätigung zu erreichen. In anderen Worten: die Asymmetrie **2** muß sehr groß gewählt werden, wenn die Klappe reibungsfrei arbeiten soll. Dies hat aber den Nachteil zur Folge, dass bereits kleine Druckunterschiede vor und hinter der Klappenscheibe zu großen Betätigungsmomenten der Absperrklappe **7** führen.

Hierbei sind die Patente WO82 / 03899 und US 4 770 393 A zu nennen, die eine Fortenwicklung dieses Prinzips darstellen. Im zuerst genannten Patent wird statt einer kugelförmigen Scheibe ein Toroid benutzt. US 4 770 393 A Patent wird die Klappenscheibe mittels zweier unterschiedlicher Drehradien dargestellt.

### 4) Sogenannte "dreifach exzentrisch" aufgebaute Klappen (richtiger wäre: "dreifach asymmetrische Klappen").

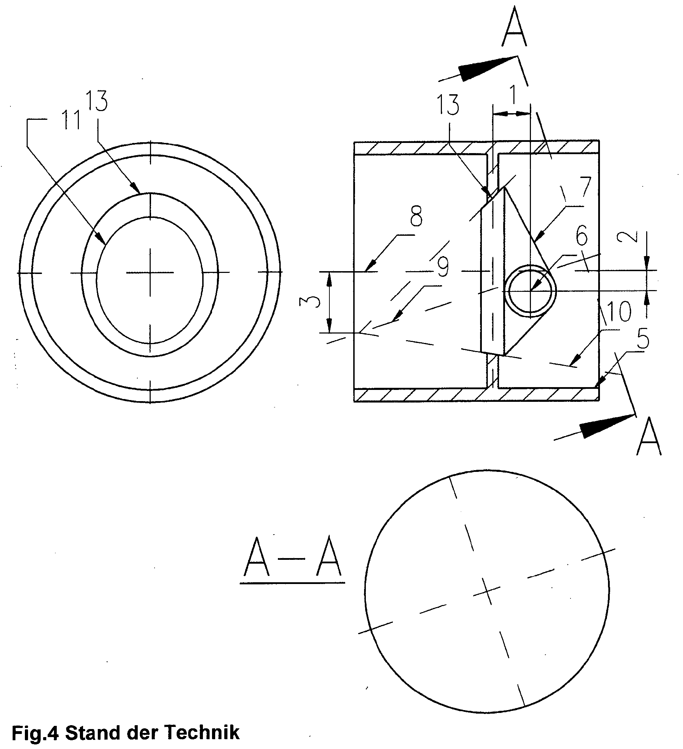

**Fig.4** Zeigt schematisch eine dreifach exzentrisch (dreifach asymmetrisch) aufgebaute Absperrklappe.
- Die Dichtungsfläche **13** ist rotationssymmetrisch.
- Die Rotationsachse (Symmetrieachse **9**) der Dichtungsfläche **13** ist nicht identisch mit der Rohrleitungsachse **8**.
- Der Drehpunkt **6** der Klappenscheibe **7** ist aus der Mitte der Dichtungsfläche **13** entlang der Rohrleitungsachse **8** versetzt: Asymmetrie **1.**
- Der Drehpunkt **6** der Klappenscheibe **7** ist aus der Mitte der Rohrleitungsachse **8** (hier nicht identisch mit der Symmetrieachse bzw. Rotationsachse der Dichtungsfläche **13**) in Richtung einer der Rohrleitungswandungen versetzt: Asymmetrie **2.**
- Die Spitze des Körpers **10,** dessen Mantelfläche die Form der Dichtungsfläche **13** vorgibt, ist aus der Mitte der Rohrleitungsachse **8** um die Asymmetrie **3** versetzt.

Diese Bauweise hat den Vorteil, dass je nach Positionierung der Lage des Mittelpunktes der Drehbewegung **6,** je nach Wahl der Asymmetrie **1,** je nach Wahl des Konuswinkels und dessen Asymmetrie **3,** eine reibungsfreie Betätigung der Armatur auch dann möglich ist, wenn die Asymmetrie 2 klein gewählt wird. Im Gegensatz zu einer doppelt exzentrisch aufgebauten Armatur kann hierbei also der Abstand des Mittelpunktes der Drehbewegung, von der Mitte der Rohrleitung klein gewählt werden, und eine reibungsfreie Betätigung wird trotzdem erreicht.
Dies hat einen entscheidenden Vorteil auf die Betätigungsmomente der Armatur. Je kleiner der Abstand des Mittelpunktes der Drehbewegung **6**, von der Mitte der Rohrleitungsachse **8** (bzw. von der Mitte der Dichtungsfläche **13**) ist, um so kleiner sind die Betätigungsmomente, die für das Öffnen bzw. Dichtschließen der Armatur notwendig sind. Diese Bedingung ist nahezu linear proportional zu der Asymmetrie **2**. Kleinere Betätigungsmomente ermöglichen kleinere Antriebe der Armatur und damit preiswertere Gesamt - Baugruppe "automatisierte Klappe". Dieser Vorteil wird um so größer, je größer die Differenzdrücke sind, bis zu denen die Armatur dichtschließen soll.

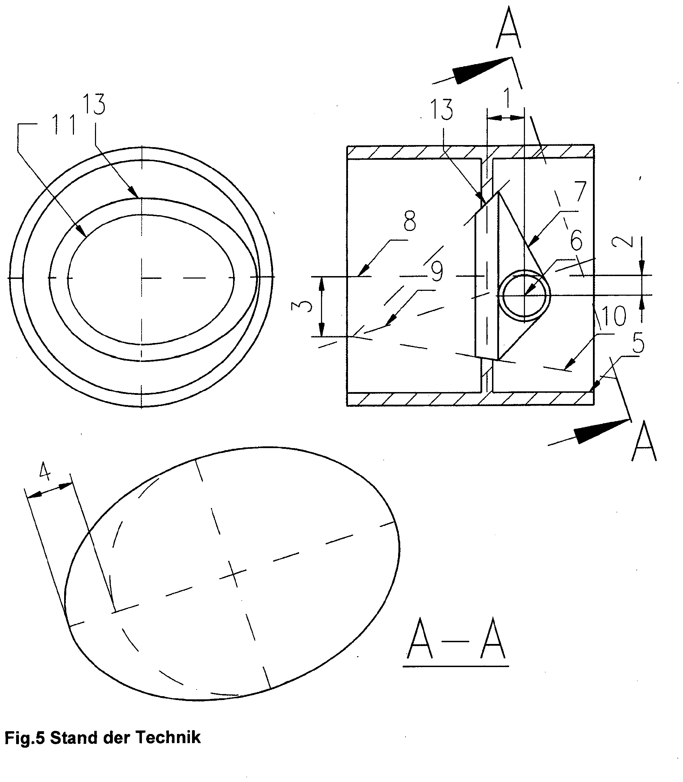

**Fig.5** zeigt schematisch eine Konstruktion einer vierfach asymmetrisch aufgebauten Absperrklappe.
- Die Symmetrieachse **9** der Dichtungsfläche **13** ist nicht identisch mit der Rohrleitungsachse **8.**
- Der Drehpunkt **6** der Klappenscheibe **7** ist aus der Mitte der Dichtungsfläche **13** entlang der Rohrleitungsachse **8** versetzt: Asymmetrie 1.
- Der Drehpunkt **6** der Klappenscheibe **7** ist aus der Mitte der Rohrleitungsachse **8** (hier nicht identisch mit der Symmetrieachse bzw. Rotationsachse der Dichtungsfläche **13**) in Richtung einer der Rohrleitungswandungen versetzt: Asymmetrie **2**.
- Die Spitze des Körpers **10,** dessen Mantelfläche die Form der Dichtungsfläche **13** vorgibt, ist aus der Mitte der Rohrleitungsachse **8** um die Asymmetrie **3** versetzt.
- Die Dichtungsfläche **13** ist nicht rotationssymmetrisch.
- Der Körper dessen Mantelfläche die Dichtungsfläche beschreibt hat an keiner Stelle und in keiner Ebene eine kreisrunde Schnittfläche.
- Die Dichtungsfläche **13** wird durch die Form des Mantels eines spitzen Kegels bzw. einer spitzen Pyramide beschrieben, wobei dessen Grundfläche vorzugsweise oval oder z.B. im Wesentlichen elliptisch ist. Der spitze Kegel bzw. die spitze Pyramide besitzt vorzugsweise eine Symmetrieachse bzw. Symmetrieebene **9.**
- Die Achsen der Ellipsen, die die Grundfläche des spitzen Kegels beschreiben sind ungleich lang. Der Unterschied ist durch das Maß **4** dargestellt: die Asymmetrie **4.**

Durch den Mantel des Körpers **10** lässt sich an keiner Stelle und in keiner Ebene ein kreisrunder Schnitt legen.

Ein gravierendes Problem ist die Tatsache, dass alle bisherigen konstruktiven Lösungen im Bereich der Welle mit höherem Verschleiß der Dichtung und Dichtungsfläche behaftet sind als an anderen Stellen des Sitzes. Dies ist hervorgerufen durch die Tatsache, daß zum einen der Drehradius in diesem Bereich sehr klein ist und durch die Tatsache, daß die Geometrie durch die kegelförmige Dichtungsfläche in sehr engen Grenzen vorgegeben ist. Je nach Wahl der Asymmetrie **2**, des Konuswinkels und dessen Lage im Raum sind im Markt befindliche Konstruktionen bekannt, bei denen die in der Scheibe liegende Dichtung erst dann keinen Kontakt mehr zur Dichtungsfläche im Gehäuse der Armatur hat, wenn die Armatur um mindestens 10° geöffnet worden ist. Dieser Kontakt während der Betätigungsvorgänge ist mit hoher Reibung und Verschleiß verbunden, den man am einfachsten durch Vergrößerung der Asymmetrie **2** vermeiden kann, der aber zu höheren Drehmomenten der Armatur führt, aufgrund der dann asymmetrischeren Druckverteilung auf der Scheibe **7**.

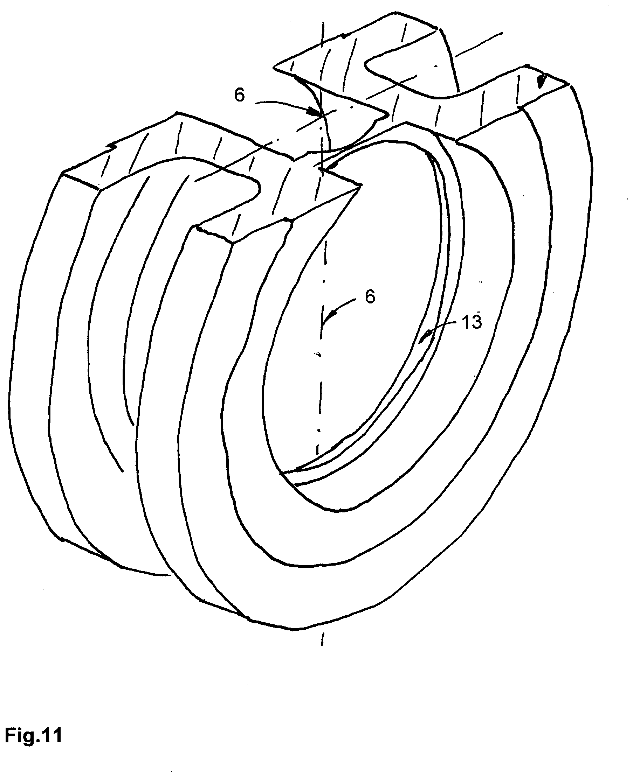

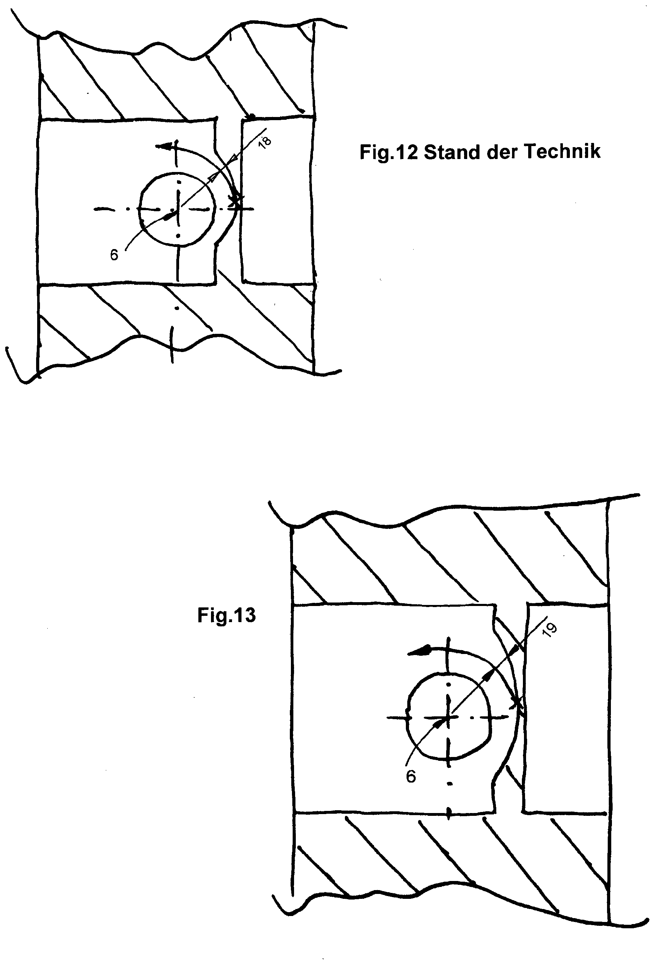

Die **Fig.11** zeigt schematisch einen Schnitt durch den fraglichen Bereich. Die **Fig.12** zeigt schematisch die Kinematik des Öffnungsvorganges in diesem Bereich der Dichtfläche **13** einer Armatur nach dem Stand der Technik.

Als Stand der Technik lassen sich z.B. die folgenden Patentschriften angeben:
DE 10 2006 033 966A1
DE 10 2006 027 057 B3
DE 10 2008 011 371
DE 199 59 109 A1

Es besteht daher Bedarf nach einer Absperrklappe, die alle Vorteile der dreifach bzw. vierfach asymmetrischen Absperrklappen beinhaltet, aber zusätzlich den Verschleiß zwischen Dichtung und Dichtungsfläche im Wellenbereich minimiert.

Die o.g. Nachteile werden mit einer erfindungsgemäßen Lösung eliminiert und erlauben eine Konstruktion, bei der der Verschleiß im Wellenbereich zwischen Dichtung und Dichtsitz minimiert wird.

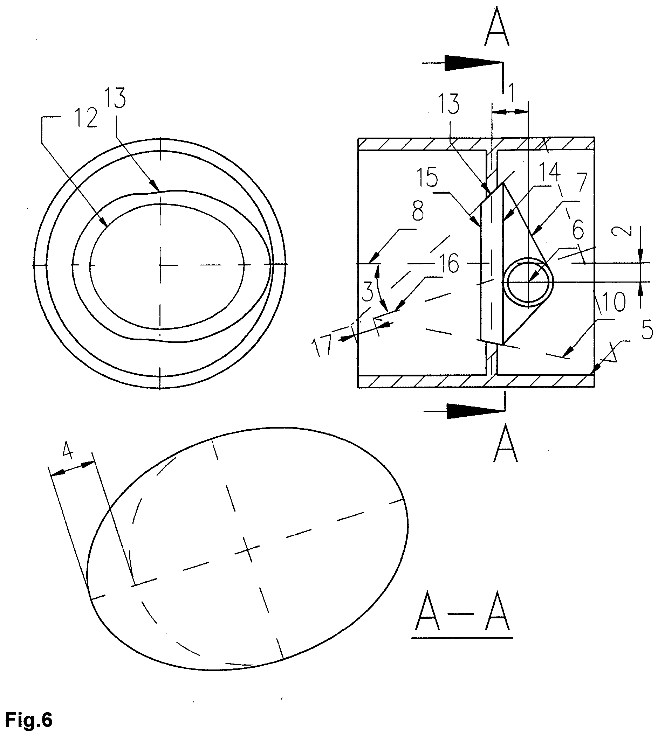

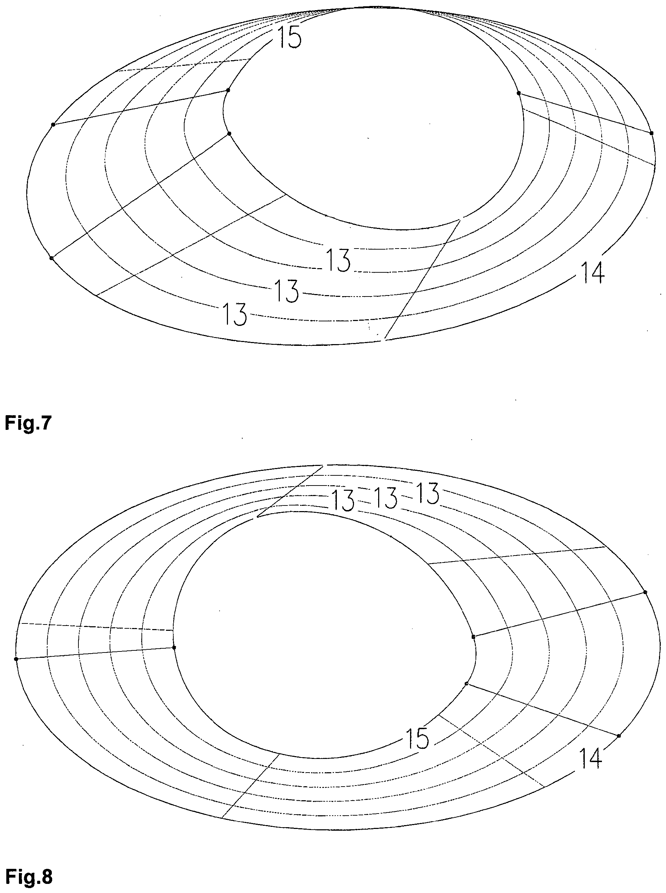

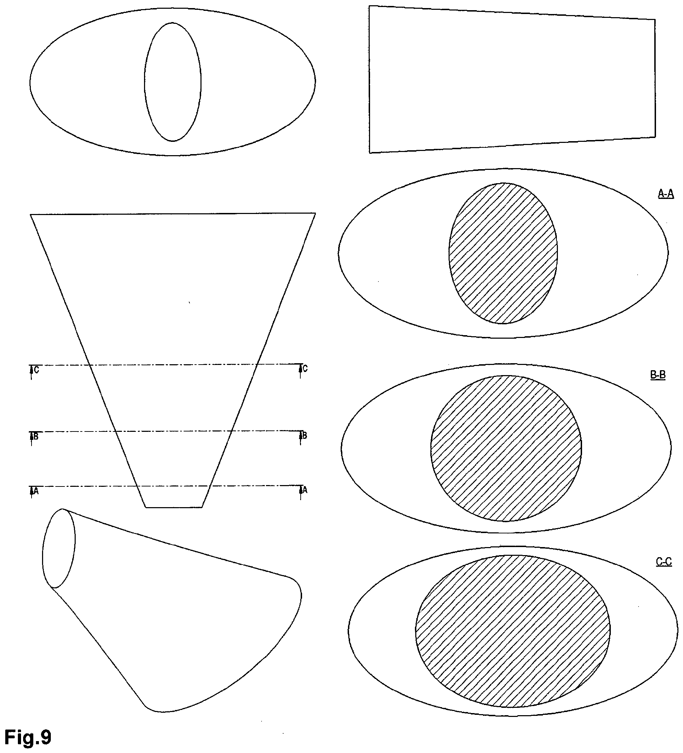

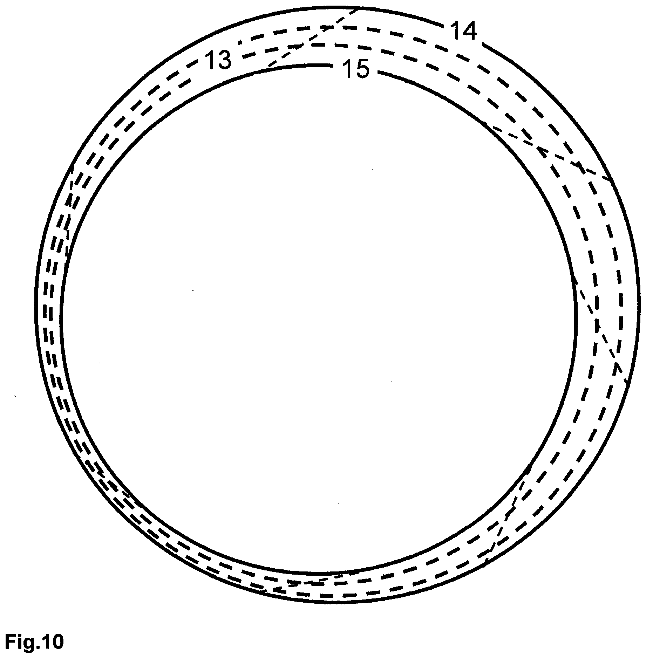

**Fig.6** zeigt schematisch eine erfindungsgemäße Konstruktion einer fünffach asymmetrisch aufgebauten Absperrklappe.
Um die Vorteile der erfindungsgemäßen Lösung gegenüber der heute im Markt üblichen Lösung nach dem Stand der Technik zu verdeutlichen, sind in der Skizze der erfindungsgemäßen Konstruktion alle Konstruktionsmerkmale, außer den erfindungsgemäßen, identisch mit denen aus der **Fig.4**
- Der Drehpunkt **6** der Klappenscheibe **7** ist aus der Mitte der Dichtungsfläche **13** entlang der Rohrleitungsachse **8** versetzt: Asymmetrie **1.**
- Der Drehpunkt **6** der Klappenscheibe **7** ist aus der Mitte der Rohrleitungsachse **8** in Richtung einer der Rohrleitungswandungen versetzt: Asymmetrie **2.**
- Mindestens ein Schnittpunkt der Geradenschar, die die Mantelfläche des Körpers **10**, dessen Mantelfläche die Form der Dichtungsfläche **13** vorgibt, ist aus der Mitte der Rohrleitungsachse **8** um die Asymmetrie **3** versetzt.
- Die Dichtungsfläche **13** ist nicht rotationssymmetrisch, einzelne ebene Schnitte dieser Dichtungsfläche können aber kreisförmig sein.
- Die Dichtungsfläche **13** wird durch die Form des Mantels **10** eines Körpers beschrieben, der eine Grundfläche **14** auf der der Welle zugewandten Seite besitzt und der ebenfalls eine Grundfläche **15** auf der der Welle abgewandten Seite besitzt, wobei beide Flächenschwerpunkte vorzugsweise mit der Achse **16** verbunden sind. Vorzugsweise ist mindestens eine der Grundflächen **14** und **15** nicht rund, es sind aber auch Konstruktionen denkbar, bei denen beide Grundflächen rund sind, die Dichtungsfläche **13** aber trotzdem nicht mit der Mantelfläche eines Kegels beschrieben werden kann. **Fig.10** zeigt schematisch eine solche Gestaltung.
- Die Grundflächen **14** bzw. **15** können beliebiger Formgebung sein und können unabhängig voneinander gestaltet sein. Sie können durch Polygone oder Polygone mit Abrundungen beschrieben sein. Vorzugsweise sind die Grundflächen oval und bestehen vorzugsweise aus Kreissegmenten oder sind ellipsenförmig oder bestehen aus ellipsenförmigen und kreisförmigen Teilstücken. Jegliche Kombinationen der Grundflächen sind möglich, so z.B. eine Grundfläche **14** die kreisrund ist und die Grundfläche **15** die durch eine Ellipse beschrieben wird. Ebenso kann die Grundfläche **15** zur Hälfte durch einen Kreis beschrieben sein und zur anderen Hälfte durch eine Ellipse und die dazugehörige Grundfläche **14** kann durch zwei Ellipsenteilstücke beschrieben sein, die mit Geraden miteinander verbunden sind.
- Vorzugsweise gehen die Grundflächenteilstücke tangential ineinander über.
- Vorzugsweise besitzen die Grundflächen die gleiche Symmetrieebene, die vorzugsweise mit der Schnittebene von **Fig.6** identisch ist.
- Die Verbindungslinie **16** ist vorzugsweise nicht parallel und nicht senkrecht zur Rohrleitungsachse.
- Die Achsen der Teilstücke die die Grundfläche beschreiben, sind ungleich lang. Der Unterschied ist durch das Maß **4** dargestellt: die Asymmetrie **4**.
- Beide Grundflächen sind mit einer Geradenschar miteinander verbunden. Im Gegensatz zu einer Pyramide und im Gegensatz zu einem Kegel treffen sich die Geraden der Geradenschar zumindest nicht alle in einem Punkt, was in der **Fig.6** schematisch dargestellt ist. Hierbei ist in der Skizze nur die Möglichkeit angedeutet, bei der zwei Geraden der Geradenschar sich in einem anderen Punkt schneiden als andere Geraden der Geradenschar . Der Abstand **17** dieser Schnittpunkte ist als Asymmetrie **5** dargestellt. Es soll aber insbesondere auch der Fall angestrebt sein, bei dem die Kurvenschar sich in keinem **(****Fig.10****),** mehreren oder sogar unendlich vielen Punkten schneidet **(****Fig.7** **und** **Fig.9****).** Die Kurvenschar soll sich gerade nicht in einem Punkt schneiden, wie dies bei einer Pyramide oder einem Kegel der Fall wäre.

Eine Möglichkeit ist schematisch in den Figuren **Fig.7** und **Fig.8** dargestellt. Beide Figuren stellen die Mantelfläche des gleichen Körpers dar, der aus den Grundflächen **14** und **15** besteht. Beide Grundflächen bestehen aus Ellipsen- und Kreisbogensegmenten, die jeweils tangential ineinander übergehen. Beide Grundflächen sind weder ähnlich noch verwandt. Beide Grundflächen sind mit einer Geradenschar verbunden. Bei dieser erfindungsgemäßen Ausführung treffen sich die Geraden der Schar gerade nicht in einem Punkt.

Zur Verdeutlichung einer möglichen Ausbildung, bei der sich keine der Geraden der Kurvenschar in keinem Punkt mit einer anderen Geraden der Kurvenschar schneidet ist ein beispielhafter Sonderfall der erfindungsgemäßen Ausführung der Dichtfläche in der **Fig.10** dargestellt. Die Kurvenschar besteht aus unendlich vielen zueinander jeweils windschief liegenden Geraden.

Ein anderer möglicher Sonderfall ist in der **Fig.9** dargestellt. Die Grundflächen **14** und **15** der erfindungsgemäßen Ausführung werden jeweils durch eine Ellipse beschrieben. Beide Ellipsen liegen auf Ebenen, deren Normalenvektor identisch ist. Die Lage der Ellipsenhauptachsen auf ihren Ebenen und die Geradenschar, die diese Grundflächen verbindet und die den Mantelkörper **10** der Dichtungsfläche **13** darstellt, ist so gewählt, dass sich in einer parallel zu den Ellipsenebenen liegenden Ebene ein kreisrunder Schnitt (B-B) durch den Mantelkörper **10** legen lässt. Bereits in infinitesimal kleiner Entfernung von dieser Ebene (B-B) in einer parallel zu den beiden Grundflächen **14** und **15** verlaufenden Ebene ist die Schnittfläche des Mantelkörpers **10** nicht mehr kreisrund (Schnitt A-A und C-C).

Die Grundflächen und insbesondere die Lage der sie verbindenden Geraden bestimmen nun wesentlich, wie die Kinematik des Öffnungsvorganges im Wellenbereich stattfindet. Über die Form der Ebenen **14** und **15** und über die Lage der Verbindungsgeraden dieser Ebenen kann stark beeinflußt werden, ob die Armatur hohem Verschleiß unterliegt oder nicht. Idealerweise sollte angestrebt werden, dass die Dichtung sofort den Kontakt zu dem Sitz verliert, sobald die Klappenscheibe auch nur wenige Winkelminuten geschwenkt wird.

Die **Fig.11** zeigt schematisch einen Schnitt durch den fraglichen Bereich. Die **Fig.13** zeigt schematisch die Kinematik des Öffnungsvorganges in diesem Bereich der Dichtfläche **13** einer erfindungsgemäßen Armatur. Durch die Tatsache, daß die Dichtfläche nunmehr kein Kegel mehr ist, kann die Kinematik in diesem Bereich beliebig verändert werden, ohne die Asymmetrie **2** verändern zu müssen. Der Vergleich der Abstände **17** und **18** zeigt den Unterschied im Öffnungsverhalten zwischen einer Armatur nach dem Stand der Technik und einer erfindungsgemäßen Konstruktion.

### Bezugszeichenliste

- **1**: Asymmetrie 1
- **2**: Asymmetrie 2
- **3**: Asymmetrie 3
- **4**: Asymmetrie 4
- **5**: Rohrleitung
- **6**: Klappenscheibendrehmitte
- **7**: Klappenscheibe
- **8**: Rohrleitungsachse
- **9**: Symmetrieachse (bzw. Ebene) der Dichtungsfläche
- **10**: Mantelkörper der Dichtungsfläche
- **11**: Lichte Öffnung Stand der Technik
- **12**: Lichte Öffnung erfindungsgemäß
- **13**: Dichtungsfläche
- **14**: Grundfläche Wellenzugewandt
- **15**: Grundfläche Wellenabgewandt
- **16**: Verbindungsgerade zwischen den Grundflächenschwerpunkten
- **17**: Asymmetrie 5
- **18**: Abstand Dichtung / Dichtfläche Stand der Technik
- **19**: Abstand Dichtung / Dichtfläche erfindungsgemäß

## Patentansprüche

1. Absperrklappe zur steuerbaren Fluiddurchströmung in einer Rohrleitung, wobei die Absperrklappe eine Klappenscheibe (7) mit einer Dichtungsfläche (13) aufweist, **dadurch gekennzeichnet, dass** die Konstruktion der Absperrklappe mindestens fünf Asymmetrien aufweist und zwar dahingehend, dass der Drehpunkt **(6)** der Klappenscheibe **(7)** aus der Mitte der Dichtungsfläche **(13)** in Richtung der Rohrleitungsachse **(8)** versetzt ist (Asymmetrie **1**) und zusätzlich der Drehpunkt **(6)** der Klappenscheibe **(7)** aus der Mitte der Klappenscheibe **(7),** senkrecht zur Rohrleitungsachse **(8)** in Richtung einer der Rohrleitungswandungen versetzt ist (Asymmetrie **2**), und zusätzlich die Dichtungsfläche **(13)** durch die Form des Mantels eines Körpers **(10)** beschrieben wird, der eine erste Grundfläche **(14)** und eine zweite Grundfläche **(15)** besitzt deren Flächenschwerpunkte mit einer Geraden **(16)** verbunden sind, wobei diese Gerade **(16)** nicht parallel, sondern in einem Winkel **(3)** (Asymmetrie **3**) zur Rohrleitungsachse **(8)** liegt und wobei mindestens eine der Grundflächen **(14)** und **(15)** nicht kreisrund ist und wobei die jeweils kürzeste und längste Ausdehnung dieser nicht kreisrunden Grundfläche unterschiedlich lang sind und dieser Unterschied durch ein Maß **(4)** dargestellt wird (Asymmetrie **4**) und wobei sich die Geraden einer Geradenschar die die erste Grundfläche **(14)** mit der zweiten Grundfläche **(15)** verbinden, gerade nicht in einem einzigen Punkt schneiden (Asymmetrie **5**) und damit der Mantelkörper **(10)** der Dichtungsfläche weder eine Pyramide noch ein Kegel ist.

2. Absperrklappe nach Anspruch 1 **dadurch gekennzeichnet, dass** die Dichtungsfläche **(13)** durch die Form des Mantels des Körpers **(10)** beschrieben wird, durch den sich an mindestens einer Stelle ein kreisrunder Querschnitt legen lässt.

3. Absperrklappe nach Anspruch 1 **dadurch gekennzeichnet, dass** die Dichtungsfläche **(13)** durch die Form des Mantels des Körpers **(10)** beschrieben wird, der eine Symmetrieebene besitzt.

4. Absperrklappe nach einem oder mehreren der Ansprüche 1-3, **dadurch gekennzeichnet, dass** die Dichtungsfläche **(13)** durch die Form eines Mantels des Körpers **(10)** beschrieben wird, wobei mindestens eine der Grundflächen **(14)** und **(15)** oval ist und durch runde und elliptische Teilstücke beschrieben wird, die jeweils tangential ineinanderlaufen und deren Achsen unterschiedlich lang sind und wobei dieser Unterschied durch das Maß **(4)** dargestellt wird (Asymmetrie **4**).

5. Absperrklappe nach einem oder mehreren der Ansprüche 1-4, **dadurch gekennzeichnet, dass** die Dichtungsfläche **(13)** durch die Form eines Mantels des Körpers **(10)** beschrieben wird, wobei mindestens eine der Grundflächen **(14)** und **(15)** die Form einer Ellipse hat.

6. Absperrklappe nach einem oder mehreren der Ansprüche 1-5, **dadurch gekennzeichnet, dass** die Dichtungsfläche **(13)** durch die Form eines Mantels des Körpers **(10)** beschrieben wird, wobei mindestens eine der Grundflächen **(14)** und **(15)** die Form einer Ellipse hat und sich zusätzlich innerhalb der Dichtungsfläche **(13)** ein ebener kreisförmiger Schnitt durch die Mantelfläche des Körpers **(10)** legen läßt.

7. Absperrklappe nach einem oder mehreren der Ansprüche 1-6, **dadurch gekennzeichnet, dass** die Dichtungsfläche **(13)** durch die Form eines Mantels des Körpers **(10)** beschrieben wird, der eine Symmetrieebene besitzt, deren Normalenvektor parallel zur Drehachse der Klappenscheibe **(7)** ist.

8. Absperrklappe nach einem oder mehreren der Ansprüche 1-7, **dadurch gekennzeichnet, dass** die Dichtungsfläche **(13)** durch die Form eines Mantels des Körpers (10) beschrieben wird, der eine Symmetrieebene besitzt, deren Normalenvektor parallel zur Drehachse der Klappenscheibe **(7)** ist und wobei zusätzlich die Rohrleitungsachse **(8)** in dieser Ebene liegt.

9. Absperrklappe nach einem oder mehreren der Ansprüche 1-8, **dadurch gekennzeichnet, dass** die Dichtungsfläche **(13)** durch die Form eines Mantels des Körpers **(10)** beschrieben wird, der eine Symmetrieebene besitzt, die parallel zur Drehachse der Klappenscheibe **(7)** ist.

10. Absperrklappe nach einem oder mehreren der Ansprüche 1-9, **dadurch gekennzeichnet, dass** die Dichtungsfläche **(13)** durch die Form eines Mantels des Körpers **(10)** beschrieben wird, bei dem sowohl die erste Grundfläche **(14)** als auch die zweite Grundfläche **(15)** jeweils die Form einer Ellipse haben und wobei sich innerhalb der Dichtungsfläche **(13)** ein kreisrunder ebener Schnitt legen läßt.

11. Absperrklappe nach einem oder mehreren der Ansprüche 1-10, **dadurch gekennzeichnet, dass** die Dichtungsfläche **(13)** durch die Form eines Mantels des Körpers **(10)** beschrieben wird, bei dem sowohl die erste Grundfläche **(14)** als auch die zweite Grundfläche **(15)** jeweils die Form einer Ellipse haben und wobei beide Ellipsen jeweils eine Hauptachse haben, die parallel zur Klappenscheibendrehmitte **(6)** ist.

12. Absperrklappe nach einem oder mehreren der Ansprüche 1-11, **dadurch gekennzeichnet, dass** die Dichtungsfläche **(13)** durch die Form eines Mantels des Körpers **(10)** beschrieben wird, bei dem sowohl die erste Grundfläche **(14)** als auch die zweite Grundfläche **(15)** jeweils die Form einer Ellipse haben und wobei beide Ellipsen jeweils eine Hauptachse haben, die senkrecht zur Klappenscheibendrehmitte **(6)** ist.

## Claims

1. Butterfly valve for controllable fluid flow, **characterized in that** the design has at least five asymmetries **in that** the pivot point **6** of the valve disc **7** is offset from the center of the sealing surface **13** in the direction of the pipe axis **8** (asymmetry **1**) and additionally the pivot point **6** of the valve disc **7** is offset from the center of the valve disc **7**, perpendicular to the pipe axis **8** in the direction of one of the pipe walls (asymmetry **2**), and additionally the sealing surface **13** is described by the shape of the jacket of the body **10**, which has a first base **14** and a second base **15**, the centroids of this areas are connected to the straight line **16**, whereby this straight line **16** is not parallel, but at an angle **3** (asymmetry **3**) to the pipe axis **8** and at least one of the base surfaces **14** and **15** is not circular and the shortest and longest extension of this not circular Base is of different lengths and those difference is represented by the dimension **4** (asymmetry **4**) and where the straight lines of the family of straight lines connecting the base **14** with the base **15** do not intersect at a single point (asymmetry **5**) and so the casing body **10** of the sealing surface is not a pyramid and is not a cone.

2. Butterfly valve according to Claim 1, **characterized in that** the sealing surface **13** is described by the shape of the casing of the body **10**, through which a circular cross-section can be laid at at least one point.

3. Butterfly valve according to Claim 1, **characterized in that** the sealing surface **13** is described by the shape of the casing of the body **10**, which has a plane of symmetry.

4. Butterfly valve according to one or more of claims 1-3, **characterized in that** the sealing surface **13** is described by the shape of a jacket of the body **10**, wherein at least one of the base surfaces **14** and **15** is oval and is described by round and elliptical sections, each run tangentially into one another and their axes are of different lengths and this difference is represented by the dimension **4** (asymmetry **4**).

5. Butterfly valve according to one or more of Claims 1-4, **characterized in that** the sealing surface **13** is described by the shape of a jacket of the body **10**, at least one of the base surfaces **14** and **15** having the shape of an ellipse.

6. Butterfly valve according to one or more of claims 1-5, **characterized in that** the sealing surface **13** is described by the shape of a jacket of the body **10**, with at least one of the base surfaces **14** and **15** having the shape of an ellipse and additionally being located within the sealing surface **13** flat circular section through the outer surface of the body **10** can be placed.

7. Butterfly valve according to one or more of claims 1-6, **characterized in that** the sealing surface **13** is described by the shape of a jacket of the body **10**, which has a plane of symmetry whose normal vector is parallel to the axis of rotation of the valve disc **7**.

8. Butterfly valve according to one or more of claims 1-7, **characterized in that** the sealing surface **13** is described by the shape of a jacket of the body **10**, which has a plane of symmetry, the normal vector of which is parallel to the axis of rotation of the valve disc **7** and wherein the pipe axis **8** lies in this plane.

9. Butterfly valve according to one or more of Claims 1-8, **characterized in that** the sealing surface **13** is described by the shape of a casing of the body **10** which has a plane of symmetry which is parallel to the axis of rotation of the valve disc **7**.

10. Butterfly valve according to one or more of claims 1-9, **characterized in that** the sealing surface 13 is described by the shape of a jacket of the body 10 which has a first section 14 and a second section 15 which both are elliptical and additionally within the sealing surface 13 a flat circular section through the outer surface of the body **10** can be placed.

11. Butterfly valve according to one or more of claims 1-10, **characterized in that** the sealing surface 13 is described by the shape of a jacket of the body 10 which has a first section 14 and a second section 15 which both are elliptical and additionally both elipses have a longer axis where both are parallel to each other.

12. Butterfly valve according to one or more of claims 1-11, **characterized in that** the sealing surface 13 is described by the shape of a jacket of the body 10 which has a first section 14 and a second section 15 which both are elliptical and additionally both elipses have a main axis which both are perpendicular to the turning point oft he disc.

## Revendications

1. Vanne papillon pour l'écoulement contrôlable de fluide dans une conduite, la vanne papillon ayant un disque de vanne **(7)** avec une surface d'étanchéité **(13)**, **caractérisée en ce que** la construction de la vanne papillon présente au moins cinq asymétries, en particulier **en ce que** que le point d'appui **(6)** du disque papillon **(7)** est décalé du centre de la surface d'étanchéité **(13)** dans la direction de l'axe (8) de la canalisation (asymétrie 1), et qu'en outre le point d'appui **(6)** du disque papillon **(7)** est décalé du centre du disque papillon **(7)**, perpendiculairement à l'axe **(8)** de la canalisation, dans la direction de l'une des parois de la canalisation **(asymétrie 2**), et qu'en outre la surface d'étanchéité **(13)** est décrite par la forme de l'enveloppe d'un corps **(10)** qui a une première surface de base **(14)** et une deuxième surface de base **(15)** dont les centres de gravité de surface sont reliés par une ligne droite **(16)**, cette ligne droite **(16)** n'étant pas parallèle, mais se trouve à un angle **(3) (asymétrie 3**) par rapport à l'axe **(8)** du pipeline et dans lequel au moins une des surfaces de base **(14)** et **(15)** est non circulaire et dans lequel l'étendue respective la plus courte et la plus longue de cette surface de base non circulaire sont de longueurs différentes et cette différence est représentée par une dimension **(4)** (**asymétrie 4**) et dans lequel les lignes droites d'un réseau de lignes droites qui relient la première surface de base **(14)** à la deuxième surface de base **(15)** ne se croisent pas en un seul point (**asymétrie 5**) et le siège dans le corps **(10)** de la surface d'étanchéité n'est donc ni une pyramide ni un cône.

2. Vanne papillon selon la revendication **1**, **caractérisée en ce que** la surface d'étanchéité **(13)** est décrite par la forme de l'enveloppe du corps (**10**), à travers laquelle une section transversale circulaire peut être posée en au moins un point.

3. Vanne papillon selon la revendication 1, **caractérisée en ce que** la surface d'étanchéité **(13)** est décrite par la forme de l'enveloppe du corps **(10)**, qui présente un plan de symétrie.

4. Vanne papillon selon une ou plusieurs des revendications 1-3, **caractérisée en ce que** la surface d'étanchéité **(13)** est décrite par la forme d'un manteau du corps (**10**), dans laquelle au moins une des surfaces de base **(14)** et **(15)** est ovale et est décrite par des sections rondes et elliptiques, dont chacune est tangentielle à l'autre et dont les axes ont des longueurs différentes, et dans laquelle cette différence est représentée par la dimension (4) **(asymétrie 4).**

5. Vanne papillon selon une ou plusieurs des revendications 1-4, **caractérisée en ce que** la surface d'étanchéité **(13)** est décrite par la forme d'une enveloppe du corps (**10**), au moins une des surfaces de base **(14)** et **(15)** ayant la forme d'une ellipse.

6. Vanne papillon selon une ou plusieurs des revendications 1-5, **caractérisée en ce que** la surface d'étanchéité **(13)** est décrite par la forme d'un manteau du corps **(10),** dans laquelle au moins une des surfaces de base **(14)** et **(15)** a la forme d'une ellipse et, en outre, une section circulaire plane peut être posée à travers la surface du manteau du corps **(10)** à l'intérieur de la surface d'étanchéité **(13).**

7. Vanne papillon selon une ou plusieurs des revendications 1-6, **caractérisée en ce que** la surface d'étanchéité **(13)** est décrite par la forme du siège du corps **(10)** qui a un plan de symétrie dont le vecteur normal est parallèle à l'axe de rotation du disque **(7)**.

8. Vanne papillon selon une ou plusieurs des revendications 1-7, **caractérisée en ce que** la surface d'étanchéité **(13)** est décrite par la forme d'un manteau du corps **(10)** ayant un plan de symétrie dont le vecteur normal est parallèle à l'axe de rotation du disque **(7)** et dans laquelle, en outre, l'axe du pipeline **(8)** se trouve dans ledit plan.

9. Vanne papillon selon une ou plusieurs des revendications 1-8, **caractérisée en ce que** la surface d'étanchéité **(13)** est décrite par la forme d'un manteau du corps **(10)** ayant un plan de symétrie qui est parallèle à l'axe de rotation du disque **(7).**

10. Vanne papillon selon une ou plusieurs des revendications 1 à 9, **caractérisée en ce que** la surface d'étanchéité **(13)** est décrite par la forme d'un manteau du corps (**10**), dans laquelle la première surface de base **(14)** et la deuxième surface de base **(15)** ont chacune la forme d'une ellipse et dans laquelle une section plane circulaire peut être posée à l'intérieur de la surface d'étanchéité **(13).**

11. Vanne papillon selon une ou plusieurs des revendications 1 à 10, **caractérisée en ce que** la surface d'étanchéité **(13)** est décrite par la forme d'une enveloppe du corps (**10**), dans laquelle la première surface de base **(14)** et la deuxième surface de base **(15)** ont chacune la forme d'une ellipse et dans laquelle les deux ellipses ont chacune un axe principal qui est parallèle au centre de rotation **(6)** du disque de vanne.

12. Vanne papillon selon une ou plusieurs des revendications 1-11, **caractérisée en ce que** la surface d'étanchéité **(13)** est décrite par la forme d'une coquille du corps (**10**), dans laquelle la première surface de base **(14)** et la deuxième surface de base **(15)** ont chacune la forme d'une ellipse et dans laquelle les deux ellipses ont chacune un grand axe qui est perpendiculaire au centre de rotation **(6)** du disque de vanne.
